# FASCICULE DE BREVET EUROPEEN

(11) **EP 1 190 210 B1**
(45) Date de publication et mention de la délivrance du brevet: **16.03.2005**
(21) Numéro de dépôt: 00937006.5
(22) Date de dépôt: 06.06.2000
(51) Int. Cl.: G01B 11/10, B07C 5/342, B07C 5/10

(54) **PROCEDE ET DISPOSITIF D'ANALYSE EN VUE DU TRI AUTOMATIQUE DE PRODUITS TELS QUE DES FRUITS**
ANALYSEVERFAHREN UND-VORRICHTUNG ZUM ZWECKE DER AUTOMATISCHEN SORTIERUNG VON PRODUKTEN WIE FRÜCHTEN
ANALYSING METHOD AND DEVICE FOR AUTOMATICALLY SORTING PRODUCTS SUCH AS FRUITS

(30) Priorité: 28.06.1999 FR 9908227
(43) Date de publication de la demande: 27.03.2002
(73) Titulaire: Matériel pour l' Arboriculture Fruitière, 82000 Montauban (FR)
(72) Inventeur: BLANC, Philippe, F-82000 Montauban (FR)
(74) Mandataire: Cabinet BARRE LAFORGUE & associés
(86) Numéro de dépôt international: PCT/FR2000/001545
(87) Numéro de publication internationale: WO 2001/001071

(56) Documents cités:
- WO-A-91/04803
- WO-A-94/10555
- US-A- 4 726 898

## Description

L'invention concerne un procédé et un dispositif d'analyse en vue du tri automatique de produits tels que des fruits.

Il existe à l'heure actuelle de nombreuses techniques destinées à permettre d'analyser des produits tels que des fruits, en vue de permettre un tri automatique de ces produits de façon à obtenir des lots homogènes aussi bien en qualité qu'en coloration.

Une première technique consiste à disposer une ou plusieurs caméra(s) au-dessus et/ou sur le côté d'un convoyeur de façon à analyser une portion de surface des fruits transportés sur celui-ci. Toutefois, cette solution conduit à un taux d'erreurs non négligeable car seule une portion de la surface des produits est analysée. De ce fait, les défauts que présentent ces produits au niveau de faces non visibles ne sont pas pris en compte lors du tri.

Pour pallier cet inconvénient, une solution consiste à disposer quatre caméras réparties autour d'un convoyeur, au niveau de sa jonction avec un autre convoyeur surélevé par rapport à ce dernier, de façon à analyser les fruits lors de leur chute. Cette solution permet, en effet, d'analyser la majeure partie de la surface des produits. Toutefois, et en premier lieu, cette solution ne permet pas d'analyser la totalité des faces supérieure et inférieure des produits. De plus, le fait de faire subir une chute aux produits constitue un risque non négligeable de traumatisme de ces derniers.

Une autre technique très couramment employée, et notamment décrite dans le brevet US 4.726.898, consiste à disposer une caméra au-dessus du convoyeur et à amener le produit à tourner sur lui-même avec une vitesse élevée au droit de cette caméra. Selon cette technique, la position et le champ optique de la caméra sont adaptés pour que cette dernière visualise quatre ou cinq fruits, de sorte que plusieurs faces successives de chaque fruit entraîné en rotation sont successivement vues par ladite caméra. Un des avantages découlant de cette disposition réside dans le fait qu'une seule caméra permet l'analyse de fruits se déplaçant sur deux lignes de convoyage parallèles. Par contre, cette disposition impose d'éloigner relativement la caméra des lignes de convoyage et conduit à une perte de résolution qui se traduit dans la pratique par l'impossibilité de déceler des points de piqûres très petits, tel que du "rusetting diffus". De plus, il s'avère que selon cette technique, les vitesses de rotation des fruits pouvant être matériellement obtenues ne conduisent qu'à la visualisation d'environ 80 % de la surface totale desdits fruits. Enfin, les défauts des zones des fruits vues avec une grande incidence s'avèrent mal analysés. L'ensemble de ces données a pour conséquence que, dans la pratique, 25 % à 30 % de la surface des fruits est soit purement non analysée, soit mal analysée.

Pour pallier l'ensemble de ces inconvénients, d'autres solutions ont été proposées, consistant par exemple à suspendre les produits ou à les transporter sur un convoyeur transparent. Toutefois, dans la pratique, ces solutions se sont avérées inexploitables.

Une autre technique décrite dans le brevet EP-0.258.810 consiste à disposer une caméra au-dessus du convoyeur, une pluralité de miroirs répartis au-dessus et sur les côtés de ce convoyeur de façon à permettre à la caméra de visualiser la face supérieure et les faces latérales des produits, et une pluralité de lampes d'éclairage réparties au-dessus du convoyeur. Hormis la face inférieure des produits reposant sur le convoyeur, cette solution permet donc d'analyser la majeure partie de la surface desdits produits sans risque de traumatisme de ces derniers. Toutefois, la mise en oeuvre d'une telle technique s'avère relativement complexe. En effet, cette mise en oeuvre impose notamment de disposer les lampes d'éclairage de façon à ne pas éblouir la caméra, disposition qui s'avère délicate à obtenir si l'on désire obtenir un éclairage uniforme. De même, les positions relatives de la caméra et des différents miroirs doivent être parfaitement définies, ce qui s'avère peu évident du fait des problèmes d'encombrement liés à la présence du convoyeur. Par ailleurs, le principe adopté qui consiste à utiliser une caméra CCD découpée en segments d'analyse conduit à une réduction non négligeable de la résolution du capteur.

Une autre technique décrite dans la demande de brevet WO 94/10555 et le brevet US-5.156.278, consiste en premier lieu à prévoir quatre postes d'analyse successifs disposés à distance les un des autres le long du convoyeur, et comprenant chacun une lentille disposée à l'aplomb dudit convoyeur et reliée à une unité lentille/filtres/photodiodes par un câble optique. De plus, selon cette technique, les fruits sont portés par un convoyeur doté de rouleaux montés libres en rotation autour d'un axe transversal, et l'on amène lesdits rouleaux à tourner autour de leurs axes de rotation entre les postes, de sorte qu'entre deux postes chaque fruit subit une rotation d'environ 90°, tandis que à l'aplomb de chacun des postes le fruit est immobile en rotation. Une telle technique permet donc de visualiser la totalité de la surface des fruits du fait que des faces complémentaires de ces derniers sont analysées au niveau de chaque poste. Toutefois, elle présente un inconvénient résultant des différences de dimension des fruits analysés. En effet, la rotation que subit un fruit de diamètre donné diffère de celle subie par un fruit de diamètre différent, de sorte que l'angle de rotation étant calculé obligatoirement pour un fruit de diamètre moyen donné, les fruits de taille supérieure ne sont pas vus entièrement, tandis que des zones en recouvrement des fruits de taille inférieure sont visualisées, conduisant à une analyse erronée de la surface desdits fruits.

La présente invention se propose de pallier l'ensemble des inconvénients des techniques ci-dessus décrites et a pour objectif essentiel de fournir un dispositif d'analyse de produits d'une mise en oeuvre et d'une exploitation très simples, permettant d'analyser la totalité de la surface de ces produits malgré les différences de dimensions de ces derniers.

A cet effet, l'invention vise un procédé d'analyse en vue du tri de produits tels que des fruits transportés selon un axe (x) sur une chaîne de convoyage comportant une pluralité de rouleaux montés libres en rotation chacun autour d'un axe de rotation transversal orthogonal à l'axe (x), et espacés de façon que deux rouleaux voisins définissent entre eux un logement pour un produit, ledit procédé d'analyse consistant à utiliser des moyens d'analyse scindés en plusieurs postes successifs disposés à distance les uns des autres selon l'axe (x), et à faire tourner les rouleaux autour de leurs axes de rotation entre les postes de façon à visualiser, au niveau de chacun desdits postes, des faces différentes de chaque produit.

Selon l'invention, ce procédé d'analyse se caractérise en ce que:
- on dépose trois postes d'analyse le long de la chaîne de convoyage, et on équipe chacun desdits postes d'analyse d'au moins une caméra orientée et adaptée pour effectuer, avec une fréquence ajustable des clichés des produits transportés par la chaîne de convoyage,
   . l'un desdits postes comportant deux caméras disposées de part et d'autre de la chaîne de convoyage dans un même plan vertical orthogonal à l'axe (x), et orientées de façon que leurs axes optiques respectifs forment un V axé sur ledit axe (x) et d'angle au sommet sensiblement compris entre 90° et 130°,
   . les deux autres postes comprenant chacun une caméra disposée à l'aplomb de la chaîne de convoyage et orientée de façon que son axe optique soit vertical et sécant avec l'axe (x),
- dans une phase préalable, on détermine le diamètre moyen des produits à analyser, et en fonction dudit diamètre moyen, une vitesse de rotation des rouleaux adaptée pour qu'un produit de diamètre moyen se trouvant dans le plan d'une caméra au niveau du premier poste, et amené à tourner sur lui-même le long de l'intégralité des moyens d'analyse sous l'effet de la rotation desdits rouleaux, subisse une rotation telle que quatre zones complémentaires de sa surface soient vues par les caméras respectives des premier, deuxième et troisième postes,
- et lors du convoyage des produits, on amène les rouleaux à tourner continuellement avec la vitesse de rotation prédéterminée, et pour chaque produit :
   . on effectue mi clichés de ce produit au niveau du premier poste, avec i ≥ 3, nj clichés au niveau du deuxième poste avec j ≥ 1, et pk clichés au niveau du troisième poste avec k ≥ 3,
   . on calcule le diamètre théorique du produit à partir des clichés effectués,
   . et on détermine par comparaison entre le diamètre théorique de ce produit avec le diamètre moyen prédéterminé, les clichés mi, nj et pk à prendre en compte en vue de l'analyse dudit produit, de façon à obtenir une analyse complète sans recouvrement. ou avec un recouvrement donné de la surface totale de ce produit.

Selon le procédé de l'invention, d'une part les caméras sont disposées et orientées, et d'autre part, chaque produit est amené à tourner continuellement lors de son transport le long du dispositif d'analyse, de façon que ledit produit soit visualisé selon quatre angles différents adaptés pour permettre d'analyser quatre faces complémentaires d'un produit de diamètre moyen déterminé. De plus, afin de prendre en compte les différences de diamètres des produits analysés par rapport au diamètre moyen prédéterminé :
- on détermine en premier lieu, de façon classique, le diamètre théorique de chaque produit,
- on déduit de la comparaison entre le diamètre théorique calculé et le diamètre moyen prédéfini l'ordre du cliché à prendre en compte en vue de l'analyse parmi les clichés effectués au niveau des divers postes, de façon à obtenir une analyse complète de la surface totale du produit. Cette sélection des clichés à analyser s'opère de façon très aisée. A titre d'exemple, si les clichés mi, nj et pk correspondent à un produit de diamètre moyen, et si l'on prend i, j, k clichés au niveau de chaque poste avec i-x ≤ i ≤ i + x, j - y ≤ j ≤ j + y, et k - z ≤ k ≤ k + z, les clichés seront :
- pour un produit de diamètre théorique sensiblement égal au diamètre moyen : mi, nj, pk,
- pour un produit de diamètre inférieur au diamètre moyen, des clichés m (i + x), n (j -y) et p (k - z) avec x, y, z d'ordre fonction de la différence de diamètre.
- pour un produit de diamètre supérieur au diamètre moyen, des clichés m (i - x), n (j + y) et p (k + z) avec x, y, z d'ordre fonction de la différence de diamètre.

Un tel procédé qui allie donc l'utilisation de plusieurs caméras réparties et orientées de façon spécifique, la mise en rotation des produits avec une vitesse de rotation donnée, et la sélection des clichés pris par les caméras en fonction du diamètre théorique des produits, permet d'analyser la totalité de la surface de chaque produit sans recouvrement ou avec un recouvrement connu, et ce malgré les différences de taille desdits produits.

Selon un mode de mise en oeuvre avantageux, on détermine une vitesse de rotation des rouleaux adaptée pour qu'un produit de diamètre moyen subisse une rotation sur lui-même d'un angle de rotation sensiblement compris entre 110° et 130° entre le premier et le deuxième postes, et d'un angle de rotation sensiblement compris entre 105° et 115° entre le deuxième et le troisième postes.

Ces angles de rotation, associés à la disposition des deux caméras situées au niveau d'un des postes, conduisent à obtenir des prises de vue de chaque produit équivalentes à celles qui seraient obtenues à partir de quatre caméras disposées aux quatre sommets d'un tétraèdre et orientées vers le barycentre dudit tétraèdre, en plaçant le produit au niveau dudit barycentre.

De façon avantageuse, ces angles de rotation peuvent être obtenus :
- en disposant les postes des moyens d'analyse de façon que la distance entre les premier et deuxième postes soient sensiblement comprise entre 1,1 et 1,2 fois la distance entre les deuxième et troisième postes,
- et en amenant les rouleaux à tourner en rotation avec une vitesse de rotation constante le long de l'intégralité dudit dispositif d'analyse.

Selon un mode de mise en oeuvre avantageux, on détermine une vitesse de rotation des rouleaux adaptée pour qu'un produit de diamètre moyen subisse une rotation sur lui-même d'un angle de rotation sensiblement égal à 125,5° entre les premier et deuxième postes, et d'un angle de rotation sensiblement égal à 109° entre les deuxième et troisième postes.

De plus, on dispose avantageusement les caméras du poste comprenant deux caméras, de façon que leurs axes optiques respectifs définissent un V d'angle au sommet sensiblement égal à 109°.

Ces angles de rotation et d'orientation des deux caméras, conduisent à l'obtention d'un système de prise de vue optimal équivalent à un système dont les quatre caméras seraient disposées aux quatre sommets d'un tétraèdre régulier.

Afin d'obtenir ces angles de rotation, et de façon avantageuse, la distance entre les premier et deuxième postes est sensiblement égale à 1,15 fois la distance entre les deuxième et troisième postes.

Par ailleurs, en équipe avantageusement le premier poste de deux caméras, et les deuxième et troisième postes d'une caméra. Le fait de disposer les deux caméras au niveau du premier poste permet de mieux définir le diamètre théorique des produits.

Par ailleurs, et de façon avantageuse, on prend trois clichés de chaque produit au niveau des premier et troisième postes, et un seul cliché desdits produits au niveau du deuxième poste.

L'invention s'étend à un dispositif d'analyse en vue du tri automatique de produits tels que des fruits, comprenant :
- une chaîne de convoyage de transport des produits selon un axe longitudinal (x), comportant une pluralité de rouleaux montés libres en rotation chacun autour d'un axe de rotation transversal orthogonal à l'axe (x), et espacés de façon que deux rouleaux voisins définissent entre eux un logement pour un produit,
- des moyens d'analyse de la surface des produits disposés au-dessus de la chaîne de convoyage et comportant plusieurs postes successifs disposés à distance les uns des autres selon l'axe (x),
- des moyens d'entraînement en rotation des rouleaux autour de leur axe de rotation, aptes à entraîner une rotation desdits rouleaux entre les postes d'analyse de façon que des faces différentes des produits soient analysées au niveau de chaque poste,
- et une unité de traitement adaptée pour recevoir les informations issues des moyens d'analyse, et pour calculer, à partir de critères programmés prédéfinis, des données de tri exploitables.

Selon l'invention, ce dispositif d'analyse se caractérise en ce que:
- les moyens d'analyse comprennent trois postes d'analyse, chacun desdits poste d'analyse comportant au moins une caméra orientée et adaptée pour effectuer, avec une fréquence ajustable des clichés des produits transportés par la chaîne de convoyage.
   . l'un desdits postes comportant deux caméras disposées de part et d'autre de la chaîne de convoyage dans un même plan vertical orthogonal à l'axe (x), et orientées de façon que leurs axes optiques respectifs forment un V axé sur ledit axe (x) et d'angle au sommet sensiblement compris entre 90° et 130°.
   . les deux autres postes comprenant chacun une caméra disposée à l'aplomb de la chaîne de convoyage et orientée de façon que son axe optique soit vertical et sécant avec l'axe (x).
- les moyens d'entraînement en rotation des rouleaux sont disposés de façon à entraîner une rotation continuelle desdits rouleaux le long des moyens d'analyse, avec une vitesse de rotation adaptée pour qu'un produit de diamètre moyen prédéterminé se trouvant dans le plan d'une caméra au niveau du premier poste, et amené à tourner sur lui-même le long de l'intégralité des moyens d'analyse sous l'effet de la rotation desdits rouleaux, subisse une rotation telle que quatre zones complémentaires de sa surface soient vues par les caméras respectives des premier, deuxième et troisième postes,
- l'unité de traitement est adaptée pour :
   . traiter, pour chaque produit, mi clichés de ce produit pris au niveau du premier poste, avec i ≥ 3, nj clichés pris au niveau du deuxième poste avec j ≥ 1, et pk clichés, au niveau du troisième poste avec k ≥ 3,
   . et déterminer par comparaison entre le diamètre théorique de ce produit avec le diamètre moyen prédéterminé, les clichés mi, nj et pk à prendre en compte en vue de l'analyse dudit produit, de façon à obtenir une analyse complète sans recouvrement ou avec un recouvrement donné de la surface totale de ce produit.

Selon un mode de réalisation avantageux, le premier poste comporte deux caméras, les deuxième et troisième postes comportant une seule caméra.

De plus, de façon avantageuse, la distance entre les premier et deuxième postes est sensiblement comprise entre 1,1 et 1,2 fois la distance entre les deuxième et troisième postes. De façon préférentielle, cette distance entre les premier et deuxième poste, est sensiblement égale à 1,15 fois la distance entre les deuxième et troisième postes.

De plus, les caméras du poste comprenant deux caméras sont avantageusement orientées de façon que leurs axes optiques respectifs définissent un V d'angle au sommet sensiblement égal à 109°.

Par ailleurs, selon un mode de réalisation avantageux, les moyens d'entraînement en rotation des rouleaux comprennent une bande sans fin s'étendant sous la chaîne de convoyage le long des moyens d'analyse, et disposée de façon à tangenter la génératrice inférieure desdits rouleaux, et des moyens d'entraînement de ladite bande sans fin aptes à la faire défiler avec une vitesse de défilement réglable différente de celle de la chaîne de convoyage.

De plus, de façon avantageuse, les moyens d'entraînement de la bande sans fin sont adaptés pour l'entraîner selon un même sens de déplacement que celui de la chaîne de convoyage avec une vitesse de défilement ajustable inférieure à celle de ladite chaîne de convoyage.

D'autres caractéristiques buts et avantages de l'invention ressortiront de la description détaillée qui suit en référence aux dessins annexés qui en représentent à titre d'exemple non limitatif un mode de réalisation préférentiel. Sur ces dessins :

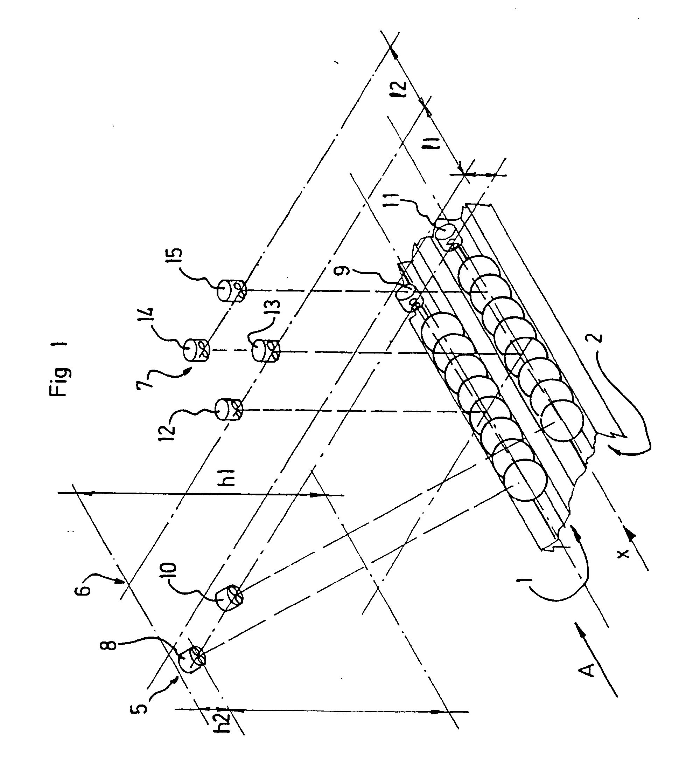

- la figure 1 est une vue en perspective schématique d'un dispositif d'analyse conforme à l'invention installé sur un dispositif de convoyage comportant deux lignes de convoyage de produits,

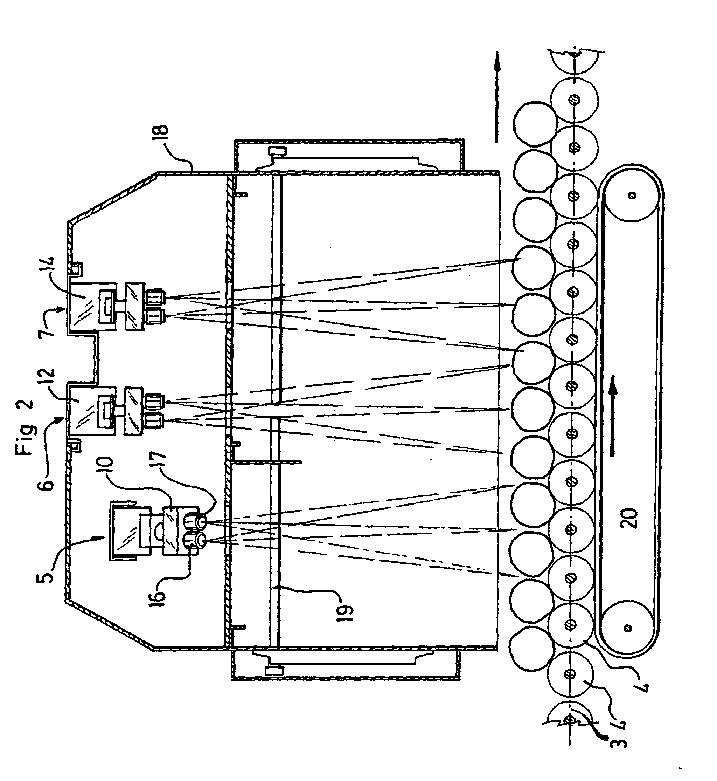

- la figure 2 est une coupe longitudinale schématique par un plan vertical B de ce dispositif d'analyse,

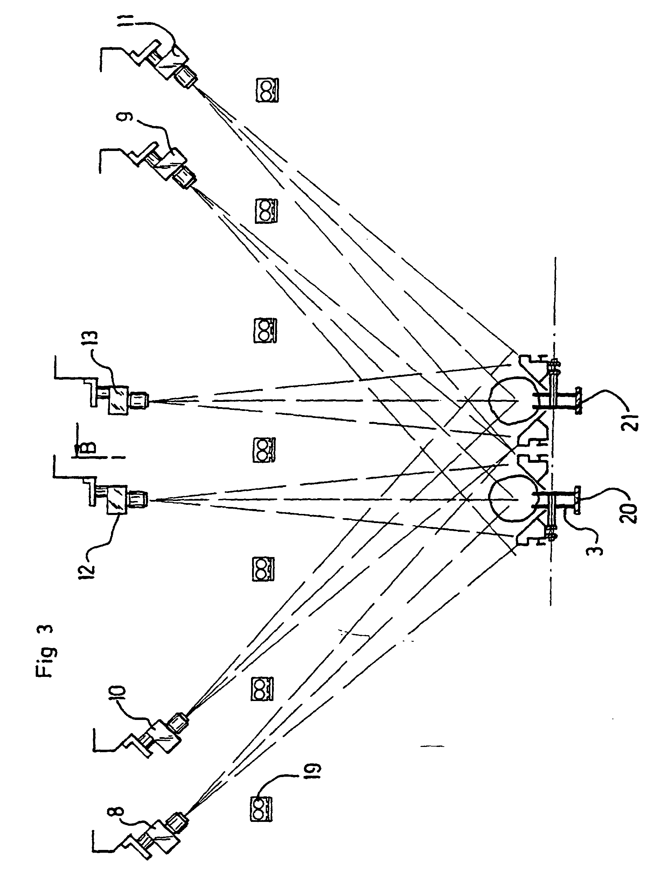

- et la figure 3 est une vue frontale selon la flèche A de ce dispositif d'analyse.

Le dispositif d'analyse conforme à l'invention est représenté aux figures installé sur un dispositif de convoyage de fruits comportant deux lignes de convoyage 1,2 parallèles. Chacune de ces lignes de convoyage 1, 2 comprend une pluralité de rouleaux tels que 3, 4 montés libres en rotation chacun autour d'un axe de rotation transversal, et espacés de façon que deux rouleaux successifs définissent entre eux un logement pour un fruit. De telles lignes de convoyage sont par exemple du type de celles décrites dans la demande de brevet FR-2.772.358 à laquelle on se référera pour plus de détails.

Ce dispositif d'analyse comprend trois poste d'analyse 5, 6, 7 disposés successivement à distance les uns des autres le long des lignes de convoyage 1, 2, et comportant pour chacune desdites lignes de convoyage :
- pour le premier poste 5, deux caméras 8, 9-10, 11 disposées de part et d'autre de la ligne de convoyage 1-2, dans un même plan vertical orthogonal à la direction de déplacement de ladite ligne de convoyage, lesdites caméras étant orientées de façon que leurs axes optiques forment un V axé sur un fruit de diamètre moyen et d'angle au somment sensiblement compris entre 90° et 130°,
- pour le deuxième poste 6, une caméra 12-13 disposée à l'aplomb de la chaîne de convoyage 1-2, et orientée de façon que son axe optique soit vertical et sécant par rapport à l'axe longitudinal de ladite chaîne de convoyage,
- pour le troisième poste 7, une caméra 14-15 disposée à l'aplomb de la chaîne de convoyage 1-2, et orientée de façon que son axe optique soit vertical et sécant par rapport à l'axe longitudinal de ladite chaîne de convoyage,

De plus, les postes d'analyse 5, 6, 7 sont espacés les uns des autres de façon que la distance 11 entre les axes optiques des caméras respectives 8-11 et 12-13 des premier 5 et deuxième 6 postes soit égale à 1,15 fois la distance 12 entre les axes optiques des caméras respectives 12-13, 14-15 des deuxième 6 et troisième 7 postes. Dans la pratique, à titre d'exemple, Il est sensiblement égal à 26 cm, et 12 par conséquent sensiblement égal à 22 cm.

De plus, les caméras 12-15 des deuxième 6 et troisième 7 postes sont disposées de façon que leurs objectifs soient situés à une hauteur h1 sensiblement égale à 80 cm au-dessus des lignes de convoyage, tandis que l'objectif des caméras 8-11 du premier poste 5, s'étend à une hauteur h1 - h2, avec h2 sensiblement égal à 9 cm, au-dessus desdites lignes de convoyage.

Par ailleurs, chaque caméra 8-15 comporte, dans un boîtier unique, deux caméras distinctes telles que 16, 17 adaptées pour effectuer des clichés entièrement superposables : une caméra classique (RVB) 16, et une caméra infrarouge 17. De plus, ces caméras 16, 17 sont des caméras "mono-coup" aptes à prendre de l'ordre de 25 clichés par seconde.

L'ensemble des caméras 8-15 est intégré dans un carter unique 18 de type classique incorporant, en outre, des moyens d'éclairage tels que 19 de type connu en soi.

Le dispositif d'analyse selon l'invention comprend, par ailleurs, à l'aplomb du carter 18, et pour chaque ligne de convoyage 1, 2, une bande sans fin 20, 21 disposée de façon à venir au contact tangentiel de la génératrice inférieure des rouleaux 3, 4, et des moyens d'entraînement desdites bandes sans fin, aptes à les déplacer avec une vitesse ajustable selon un même sens de déplacement que celui desdites lignes de convoyage.

Le fonctionnement du dispositif d'analyse selon l'invention est décrit ci-dessous.

En premier lieu, et dans une phase préalable, le diamètre moyen des fruits convoyés est déterminé. La vitesse de déplacement des bandes sans fin 20, 21 est ensuite ajustée, en fonction de la vitesse de défilement des lignes de convoyage 1, 2, de façon que la rotation des rouleaux 3, 4 conduise un fruit moyen à subir une rotation sur lui-même d'un angle de 125,5° sur la distance 11 séparant les premier et deuxième postes 5, 6, et par conséquent, compte tenu de la vitesse constante de défilement desdites bandes sans fin et lignes de convoyage, une rotation sur lui-même de 109° sur la distance 12 séparant les deuxième et troisième postes 6, 7.

En cours d'analyse, trois clichés mi, avec i - 1 ≤ i ≤ i + 1, de chaque fruit sont pris au niveau du premier poste 5, un seul cliché n au niveau du deuxième poste, et trois clichés pk avec k - 1 ≤ k ≤ k + 1 au niveau du troisième poste.

Après conversion classique de type analogique/numérique, ces clichés sont mémorisés et leur traitement consiste à :
- calculer le diamètre théorique de chaque fruit à partir des mi et n clichés pris au niveau des premier et deuxième postes 5, 6,
- à partir du calcul du diamètre théorique, déterminer les clichés à prendre en compte en vue du calcul des données de tri exploitables, cette détermination consistant à sélectionner :
   . pour un fruit de diamètre égal ou voisin au diamètre moyen, les clichés mi, n et pk,
   . pour un fruit de petite taille, c'est-à-dire de diamètre inférieur au diamètre moyen, les clichés m (i + 1), n et p (k - 1),
   . et pour un fruit de grosse taille, c'est-à-dire de diamètre supérieur au diamètre moyen, les clichés m (i - 1), n et p (k + 1).

Il est à noter que bien que les figures représentent un convoyeur doté de deux lignes de convoyages, le dispositif d'analyse peut être installé sur un convoyeur doté de n lignes parallèles avec n ≥ 1, le nombre de caméras 8-15 étant alors égal à 4 n avec 2 n caméras au niveau du premier poste 5, et n caméras au niveau de chacun des deuxième et troisième postes 6, 7.

## Revendications

1. Procédé d'analyse en vue du tri de produits tels que des fruits transportés selon un axe (x) sur une chaîne de convoyage comportant une pluralité de rouleaux (3, 4) montés libres en rotation chacun autour d'un axe de rotation transversal orthogonal à l'axe (x), et espacés de façon que deux rouleaux voisins (3, 4) définissent entre eux un logement pour un produit, ledit procédé d'analyse consistant à utiliser des moyens d'analyse scindés en plusieurs postes successifs (5, 6, 7) disposés à distance les uns des autres selon l'axe (x), et à faire tourner les rouleaux (3, 4) autour de leurs axes de rotation entre les postes (5, 6, 7) de façon à visualiser, au niveau de chacun desdits postes, des faces différentes de chaque produit, et **se caractérisant en ce que** :
- on dispose trois postes d'analyse (5-7) le long de la chaîne de convoyage, et on équipe chacun desdits postes d'analyse d'au moins une caméra (8, 9, 12, 14) orientée et adaptée pour effectuer, avec une fréquence ajustable des clichés des produits transportés par la chaîne de convoyage.
. l'un desdits postes (5) comportant deux caméras (8, 9) disposées de part et d'autre de la chaîne de convoyage dans un même plan vertical orthogonal à l'axe (x), et orientées de façon que leurs axes optiques respectifs forment un V axé sur ledit axe (x) et d'angle au sommet sensiblement compris entre 90° et 130°.
. les deux autres postes (6, 7) comprenant chacun une caméra (12, 14) disposée à l'aplomb de la chaîne de convoyage et orientée de façon que son axe optique soit vertical et sécant avec l'axe (x).
- dans une phase préalable, on détermine le diamètre moyen des produits à analyser, et en fonction dudit diamètre moyen, une vitesse de rotation des rouleaux (3, 4) adaptée pour qu'un produit de diamètre moyen se trouvant dans le plan d'une caméra (8, 9) au niveau du premier poste (5), et amené à tourner sur lui-même le long de l'intégralité des moyens d'analyse sous l'effet de la rotation desdits rouleaux, subisse une rotation telle que quatre zones complémentaires de sa surface soient vues par les caméras respectives (8, 9, 12, 14) des premier, deuxième et troisième postes (5-7),
- et lors du convoyage des produits, on amène les rouleaux (3,4) à tourner continuellement avec la vitesse de rotation prédéterminée, et pour chaque produit :
. on effectue mi clichés de ce produit au niveau du premier poste (5), avec i ≥ 3, nj clichés au niveau du deuxième poste (6) avec j ≥ 1, et pk clichés au niveau du troisième poste (7) avec k ≥ 3.
. on calcule le diamètre théorique du produit à partir des clichés effectués,
. et on détermine par comparaison entre le diamètre théorique de ce produit avec le diamètre moyen prédéterminé, les clichés mi, nj et pk à prendre en compte en vue de l'analyse dudit produit, de façon à obtenir une analyse complète sans recouvrement ou avec un recouvrement donné de la surface totale de ce produit.

2. Procédé d'analyse selon la revendication 1, **caractérisé en ce que** l'on détermine une vitesse de rotation des rouleaux (3, 4) adaptée pour qu'un produit de diamètre moyen subisse une rotation sur lui-même d'un angle de rotation sensiblement compris entre 110° et 130° entre le premier et le deuxième postes (5, 6), et d'un angle de rotation sensiblement compris entre 105° et 115° entre le deuxième et le troisième postes (6, 7).

3. Procédé d'analyse selon la revendication 2, **caractérisé en ce que** l'on dispose les postes (5-7) des moyens d'analyse de façon que la distance entre les premier et deuxième postes (5, 6) soit sensiblement comprise entre 1,1 et 1,2 fois la distance entre les deuxième et troisième postes (6, 7), et **en ce que** l'on amène les rouleaux (3, 4) à tourner en rotation avec une vitesse de rotation constante le long de l'intégralité dudit dispositif d'analyse.

4. Procédé d'analyse selon l'une des revendications 2 ou 3, **caractérisé en ce que** l'on détermine une vitesse de rotation des rouleaux (3, 4) adaptée pour qu'un produit de diamètre moyen subisse une rotation sur lui-même d'un angle de rotation sensiblement égal à 125,5° entre les premier et deuxième postes (5, 6), et d'un angle de rotation sensiblement égal à 109° entre les deuxième et troisième postes (6, 7).

5. Procédé d'analyse selon l'une des revendications 2 à 4, **caractérisé en ce que** la distance entre les premier et deuxième postes (5, 6) est sensiblement égale à 1,15 fois la distance entre les deuxième et troisième postes (6, 7).

6. Procédé d'analyse selon l'une des revendications 2 à 5, **caractérisé en ce que** l'on dispose les caméras (8, 9) du poste (5) comprenant deux caméras, de façon que leurs axes optiques respectifs définissent un V d'angle au sommet sensiblement égal à 109°.

7. Procédé d'analyse selon l'une des revendications précédentes, **caractérisé en ce que** l'on équipe le premier poste (5) de deux caméras (8, 9), et les deuxième et troisièmes postes (6, 7) d'une caméra (12, 14).

8. Procédé d'analyse selon l'une des revendications précédentes, **caractérisé en ce que** l'on prend trois clichés de chaque produit au niveau des premier et troisième postes (5, 7), et un seul cliché desdits produits au niveau du deuxième poste (6).

9. Dispositif d'analyse en vue du tri automatique de produits tels que des fruits, comprenant :
- une chaîne de convoyage de transport des produits selon un axe longitudinal (x), comportant une pluralité de rouleaux (3, 4) montés libres en rotation chacun autour d'un axe de rotation transversal orthogonal à l'axe (x), et espacés de façon que deux rouleaux voisins (3, 4) définissent entre eux un logement pour un produit,
- des moyens d'analyse de la surface des produits disposés au-dessus de la chaîne de convoyage et comportant plusieurs postes successifs (5-7) disposés à distance les uns des autres selon l'axe (x),
- des moyens (20) d'entraînement en rotation des rouleaux (3, 4) autour de leur axe de rotation, aptes à entraîner une rotation desdits rouleaux entre les postes d'analyse (5-7) de façon que des faces différentes des produits soient analysées au niveau de chaque poste,
- et une unité de traitement adaptée pour recevoir les informations issues des moyens d'analyse, et pour calculer, à partir de critères programmés prédéfinis, des données de tri exploitables, ledit dispositif d'analyse étant **caractérisé en ce que** :
- les moyens d'analyse comprennent trois postes d'analyse, chacun desdits postes (5-7) comportant au moins une caméra (8, 9, 12, 14) orientée et adaptée pour effectuer, avec une fréquence ajustable des clichés des produits transportés par la chaîne de convoyage.
- l'un desdits postes (5) comportant deux caméras (8, 9) disposées de part et d'autre de la chaîne de convoyage dans un même plan vertical orthogonal à l'axe (x), et orientées de façon que leurs axes optiques respectifs forment un V axé sur ledit axe (x) et d'angle au sommet sensiblement compris entre 90° et 130°.
- les deux autres postes (6, 7) comprenant chacun une caméra (2, 14) disposée à l'aplomb de la chaîne de convoyage et orientée de façon que son axe optique soit vertical et sécant avec l'axe (x).
- les moyens (20) d'entraînement en rotation des rouleaux (3, 4) sont disposés de façon à entraîner une rotation continuelle desdits rouleaux le long des moyens d'analyse, avec une vitesse de rotation adaptée pour qu'un produit de diamètre moyen prédéterminé se trouvant dans le plan d'une caméra (8, 9) au niveau du premier poste (5), et amené à tourner sur lui-même le long de l'intégralité des moyens d'analyse sous l'effet de la rotation desdits rouleaux, subisse une rotation telle que quatre zones complémentaires de sa surface soient vues par les caméras (8, 9, 12, 14) respectives des premier, deuxième et troisième postes (5-7),
- l'unité de traitement est adaptée pour :
- traiter, pour chaque produit, mi clichés de ce produit pris au niveau du premier poste (5), avec i ≥ 3, nj clichés pris au niveau du deuxième poste (6) avec j ≥ 1, et pk clichés pris au niveau du troisième poste (7) avec k ≥ 3,
- et déterminer par comparaison entre le diamètre théorique de ce produit avec le diamètre moyen prédéterminé, les clichés mi, nj et pk à prendre en compte en vue de l'analyse dudit produit, de façon à obtenir une analyse complète sans recouvrement ou avec un recouvrement donné de la surface totale de ce produit.

10. Dispositif d'analyse selon la revendication 9, **caractérisé en ce que** le premier poste (5) comporte deux caméras (8, 9), les deuxième et troisième postes (6, 7) comportant une seule caméra (12, 14).

11. Dispositif d'analyse selon l'une des revendications 9 ou 10, **caractérisé en ce que** la distance entre le premier et le deuxième postes (5, 6) est sensiblement comprise entre 1,1 et 1,2 fois la distance entre le deuxième et troisième postes (6, 7).

12. Dispositif d'analyse selon la revendication 11, **caractérisé en ce que** la distance entre le premier et le deuxième postes (5, 6) est sensiblement égale à 1,15 fois la distance entre les deuxième et troisième postes (6, 7).

13. Dispositif d'analyse selon l'une des revendications 9 à 12, **caractérisé en ce que** les caméras (8, 9) du poste (5) comprenant deux caméras sont orientées de façon que leurs axes optiques respectifs définissent un V d'angle au sommet sensiblement égal à 109°.

14. Dispositif d'analyse selon l'une des revendications 9 à 13, **caractérisé en ce que** les moyens d'entraînement en rotation des rouleaux (3, 4) comprennent une bande sans fin (20) s'étendant sous la chaîne de convoyage le long des moyens d'analyse, et disposée de façon à tangenter la génératrice inférieure desdits rouleaux, et des moyens d'entraînement de ladite bande sans fin aptes à la faire défiler avec une vitesse de défilement réglable différente de celle de la chaîne de convoyage.

15. Dispositif d'analyse selon la revendication 14, **caractérisé en ce que** les moyens d'entraînement de la bande sans fin (20) sont adaptés pour l'entraîner selon un même sens de déplacement que celui de la chaîne de convoyage avec une vitesse de défilement ajustable inférieure à celle de ladite chaîne de convoyage.

## Patentansprüche

1. Analyseverfahren zum Sortieren von Produkten wie Früchten, die über eine Achse (x) auf einem Förderband transportiert werden, das eine Mehrzahl von Rollen (3, 4), die frei um eine transversale Rotationsachse orthogonal zur Achse (x) drehbar montiert ist, und Räume umfasst, so dass zwei benachbarte Rollen (3, 4) zwischen sich eine Aufnahme für ein Produkt definieren, wobei das genannte Analyseverfahren darin besteht, Analysemittel zu verwenden, die an mehreren aufeinander folgenden Stationen (5, 6, 7), die in Abständen voneinander auf der Achse (x) angeordnet sind, gespalten sind, und die Rollen (3, 4) um ihre Rotationsachsen zwischen den Stationen (5, 6, 7) zu drehen, um in der Höhe jeder der genannten Stationen die verschiedenen Seiten jedes Produkts sichtbar zu machen, und **dadurch gekennzeichnet, dass**:
- drei Analysestationen (5-7) entlang des Förderbandes angeordnet werden und jede der genannten Analysestationen mit wenigstens einer Kamera (8, 9, 12, 14) ausgestattet ist, die so ausgerichtet und gestaltet ist, dass sie mit einer einstellbaren Häufigkeit Aufnahmen von den über das Förderband transportierten Produkten macht;
. wobei eine der genannten Stationen (5) zwei Kameras (8, 9) hat, die auf beiden Seiten des Förderbandes in derselben vertikalen Ebene orthogonal zur Achse (x) angeordnet und so ausgerichtet sind, dass ihre jeweiligen optischen Achsen ein V in Bezug auf die genannte Achse (x) und einen Spitzenwinkel im Wesentlichen zwischen 90° und 130° bilden;
. wobei die beiden anderen Stationen (6, 7) jeweils eine Kamera (12, 14) umfassen, die lotrecht zu dem Förderband angeordnet und so ausgerichtet ist, dass ihre optische Achse vertikal ist und die Achse (x) schneidet;
- in einer Vorabphase der mittlere Durchmesser der zu analysierenden Produkte und in Abhängigkeit von dem genannten mittleren Durchmesser eine Rotationsgeschwindigkeit der Rollen (3, 4) ermittelt wird, so dass ein Produkt mit einem mittleren Durchmesser, das sich in der Höhe der ersten Station (5) in der Ebene einer Kamera (8, 9) befindet und das entlang der Gesamtheit der Analysemittel durch die Wirkung der Rotation der genannten Rollen in Drehung versetzt wird, eine solche Rotation erfährt, dass die vier komplementären Zonen ihrer Oberfläche von den jeweiligen Kameras (8, 9, 12, 14) der ersten, zweiten und dritten Station (5-7) erfasst werden;
- und bei der Förderung der Produkte die Rollen (3, 4) kontinuierlich mit der vorbestimmten Rotationsgeschwindigkeit in Drehung versetzt werden, und für jedes Produkt:
. mi Aufnahmen dieses Produkts in der Höhe der ersten Station (5), wobei i ≥ 3 ist, nj Aufnahmen in der Höhe der zweiten Station (6), wobei j ≥ 1 ist, und pk Aufnahmen in der Höhe der dritten Station (7), wobei k ≥ 3 ist, gemacht werden;
. der theoretische Durchmesser des Produkts auf der Basis der gemachten Aufnahmen errechnet wird,
. durch Vergleichen des theoretischen Durchmessers dieses Produkts mit dem vorbestimmten mittleren Durchmesser die Aufnahmen mi, nj und pk ermittelt werden, die zum Analysieren des genanntes Produkts zu berücksichtigen sind, um eine komplette Analyse ohne Überlappung oder mit einer gegebenen Überlappung der Gesamtfläche dieses Produkts zu erhalten.

2. Analyseverfahren nach Anspruch 1, **dadurch gekennzeichnet, dass** eine solche Rotationsgeschwindigkeit der Rollen (3, 4) bestimmt wird, dass ein Produkt mit mittlerem Durchmesser eine Drehung um sich selbst mit einem Winkel im Wesentlichen zwischen 110° und 130° zwischen der ersten und der zweiten Station (5, 6) und einem Drehwinkel im Wesentlichen zwischen 105° und 115° zwischen der zweiten und der dritten Station (6, 7) erfährt.

3. Analyseverfahren nach Anspruch 2, **dadurch gekennzeichnet, dass** die Stationen (5-7) der Analysemittel so angeordnet werden, dass der Abstand zwischen der ersten und der zweiten Station (5, 6) im Wesentlichen das 1,1- bis 1,2fache des Abstands zwischen der zweiten und der dritten Station (6, 7) beträgt, und dadurch, dass die Rollen (3, 4) mit einer konstanten Rotationsgeschwindigkeit über die Gesamtheit der genannten Analysevorrichtung in Drehung versetzt werden.

4. Analyseverfahren nach Anspruch 2 oder 3, **dadurch gekennzeichnet, dass** eine solche Rotationsgeschwindigkeit der Rollen (3, 4) bestimmt wird, dass ein Produkt mit mittlerem Durchmesser eine Drehung um sich selbst mit einem Rotationswinkel im Wesentlichen von 125,5° zwischen der ersten und der zweiten Station (5, 6) und einem Rotationswinkel im Wesentlichen von 109° zwischen der zweiten und der dritten Station (6, 7) erfährt.

5. Analyseverfahren nach einem der Ansprüche 2 bis 4, **dadurch gekennzeichnet, dass** der Abstand zwischen der ersten und der zweiten Station (5, 6) im Wesentlichen das 1,15fache des Abstands zwischen der zweiten und der dritten Station (6, 7) beträgt.

6. Analyseverfahren nach einem der Ansprüche 2 bis 5, **dadurch gekennzeichnet, dass** die Kameras (8, 9) der Station (5) zwei Kameras umfassen, so dass ihre jeweiligen optischen Achsen ein V mit einem Spitzenwinkel von im Wesentlichen 109° definieren.

7. Analyseverfahren nach einem der vorherigen Ansprüche, **dadurch gekennzeichnet, dass** die erste Station (5) mit zwei Kameras (8, 9) ausgestattet ist und die zweite und die dritte Station (6, 7) mit einer Kamera (12, 14) ausgestattet wird.

8. Analyseverfahren nach einem der vorherigen Ansprüche, **dadurch gekennzeichnet, dass** drei Aufnahmen von jedem Produkt in der Höhe der ersten und der dritten Station (5, 7) und eine einzige Aufnahme der genannten Produkte in der Höhe der zweiten Station (6) gemacht werden.

9. Analysevorrichtung zum automatischen Sortieren von Produkten wie Früchten, die Folgendes umfasst:
- ein Förderband zum Transportieren von Produkten über eine Längsachse (x), die eine Mehrzahl von Rollen (3, 4), die jeweils frei um eine transversale Rotationsachse orthogonal zur Achse (x) drehbar montiert sind, und Räume umfasst, so dass zwei benachbarte Rollen (3, 4) eine Aufnahme für ein Produkt zwischen sich definieren,
- Mittel zum Analysieren der Oberfläche der Produkte, die über dem Förderband angeordnet sind und mehrere aufeinander folgende Stationen (5-7) umfassen, die in Abständen voneinander auf der Achse (x) angeordnet sind,
. Mittel (20), um die Rollen (3, 4) um ihre Rotationsachse in Drehung zu versetzen, die geeignet sind, die genannten Rollen zwischen den Analysestationen (5-7) so in Drehung zu versetzen, dass die verschiedenen Seiten der Produkte in der Höhe jeder Station analysiert werden,
. und eine Bearbeitungseinheit mit der Aufgabe, die von den Analysemitteln gesendeten Informationen zu empfangen und auf der Basis programmierter vordefinierter Kriterien nutzbare Sortierungsdaten zu errechnen,
wobei die genannte Analysevorrichtung **dadurch gekennzeichnet ist, dass**:
- die Analysemittel drei Analysestationen umfassen, wobei jede der genannten Stationen (5-7) wenigstens eine Kamera (8, 9, 12, 14) umfasst, die so ausgerichtet und gestaltet sind, dass sie mit einer einstellbaren Häufigkeit Aufnahmen von den über das Förderband transportierten Produkten macht;
- wobei eine der genannten Stationen (5) zwei Kameras (8, 9) umfasst, die auf beiden Seiten des Förderbandes in derselben vertikalen Ebene orthogonal zur Achse (x) angeordnet und so ausgerichtet sind, dass ihre jeweiligen optischen Achsen ein V in Bezug auf die genannte Achse (x) und einen Spitzenwinkel im Wesentlichen zwischen 90° und 130° bilden;
- die beiden anderen Stationen (6, 7) jeweils eine Kamera (12, 14) umfassen, die lotrecht zu dem Förderband angeordnet und so ausgerichtet ist, dass ihre optische Achse vertikal ist und die Achse (x) schneidet;
- die Mittel (20), um die Rollen (3, 4) in Drehung zu versetzen, so angeordnet sind, dass eine kontinuierliche Rotation der genannten Rollen entlang der Analysemittel mit einer solchen Rotationsgeschwindigkeit erzeugt wird, dass ein Produkt von vorbestimmtem mittlerem Durchmesser, das sich in der Höhe der ersten Station (5) in der Ebene einer Kamera (8, 9) befindet und entlang der Gesamtheit der Analysemittel durch die Wirkung der Rotation der genannten Rollen um sich selbst in Drehung versetzt wird, eine solche Drehung erfährt, dass die vier komplementären Zonen ihrer Oberfläche von den jeweiligen Kameras (8, 9, 12, 14) der ersten, zweiten und dritten Station (5-7) erfasst werden;
- die Bearbeitungseinheit die Aufgabe hat:
. für jedes Produkt mi Aufnahmen dieses Produkts, die in der Höhe der ersten Station (5) gemacht wurden,
wobei i ≥ 3 ist, nj Aufnahmen, die in der Höhe der zweiten Station (6) gemacht wurden, wobei j ≥ 1 ist, und pk Aufnahmen in der Höhe der dritten Station (7), wobei k ≥ 3 ist, zu bearbeiten;
. durch Vergleichen des theoretischen Durchmessers dieses Produkts mit dem vorbestimmten mittleren Durchmesser die Aufnahmen mi, nk und pk zu ermitteln, die zum Analysieren des genanntes Produkts zu berücksichtigen sind, um eine komplette Analyse ohne Überlappung oder mit einer gegebenen Überlappung der Gesamtfläche dieses Produkts zu erhalten.

10. Analysevorrichtung nach Anspruch 9, **dadurch gekennzeichnet, dass** die erste Station (5) zwei Kameras (8, 9) hat und die zweite und dritte Station (6, 7) eine einzige Kamera (12, 14) haben.

11. Analysevorrichtung nach Anspruch 9 oder 10, **dadurch gekennzeichnet, dass** der Abstand zwischen der ersten und der zweiten Station (5, 6) im Wesentlichen das 1,1- bis 1,2fache des Abstands zwischen der zweiten und der dritten Station (6, 7) beträgt.

12. Analysevorrichtung nach Anspruch 11, **dadurch gekennzeichnet, dass** der Abstand zwischen der ersten und der zweiten Station (5, 6) im Wesentlichen das 1,5fache des Abstands zwischen der zweiten und der dritten Station (6, 7) beträgt.

13. Analysevorrichtung nach einem der Ansprüche 9 bis 12, **dadurch gekennzeichnet, dass** die Kameras (8, 9) der Station (5), die zwei Kameras hat, so ausgerichtet sind, dass ihre jeweiligen optischen Achsen ein V mit einem Spitzenwinkel von im Wesentlichen 109° definieren.

14. Analysevorrichtung nach einem der Ansprüche 9 bis 13, **dadurch gekennzeichnet, dass** die Mittel, um die Rollen (3, 4) in Drehung zu versetzen, ein Endlosband (20), das unter dem Förderband entlang der Analysemittel verläuft und so angeordnet ist, dass es eine Tangente zu der unteren Mantellinie der genannten Rollen bildet, und Mittel umfassen, um das genannte Endlosband mitzunehmen, so gestaltet, dass sie es mit einer regulierbaren Bewegungsgeschwindigkeit antreiben, die sich von der des Förderbandes unterscheidet.

15. Analysevorrichtung nach Anspruch 14, **dadurch gekennzeichnet, dass** die Mittel zum Antreiben des Endlosbandes (20) so gestaltet sind, dass sie es in derselben Bewegungsrichtung antreiben wie das Förderband, mit einer einstellbaren Bewegungsgeschwindigkeit, die geringer ist als die des genannten Förderbandes.

## Claims

1. Analysing method with a view to sorting products such as pieces of fruit which are transported along an axis (x) on a conveyer line having a plurality of rollers (3, 4) which are mounted so as to each rotate freely about a transverse axis of rotation orthogonal to the axis (x), and which are spaced apart in such a way that two adjoining rollers (3, 4) define, between them, a seating for a product, the said analysing method consisting in using analysing means which are split up into a number of successive stations (5, 6, 7) arranged at a distance from one another along the axis (x), and in causing the rollers (3, 4) to revolve about their axes of rotation between the stations (5, 6, 7) in such a way as to display, at each of the said stations, different faces of each product, and being **characterised in that**:
- three analysing stations (5-7) are arranged along the conveyer line, and each of the said analysing stations is equipped with at least one camera (8, 9, 12, 14) which is orientated and adapted to make, with an adjustable frequency, photographs of the products transported by the conveyer line,
. one of the said stations (5) having two cameras (8, 9) which are arranged on either side of the conveyer line in the same vertical plane orthogonal to the axis (x), and are orientated in such a way that their respective optical axes form a V which is centred on the said axis (x) and has a vertex angle substantially in the range between 90° and 130°,
. the other two stations (6, 7) each comprising a camera (12, 14) which is arranged plumb with the conveyer line and is orientated in such a way that its optical axis is vertical and secant with the axis (x),
- in a preliminary phase, there are determined the average diameter of the products to be analysed and, as a function of the said average diameter, a speed of rotation of the rollers (3, 4) which is adapted so that a product of average diameter which is located in the plane of a camera (8, 9) at the first station (5) and is caused to revolve on itself along the whole of the analysing means under the effect of the rotation of the said rollers, undergoes a rotation such that four complementary zones on its surface are viewed by the respective cameras (8, 9, 12, 14) of the first, second and third stations (5-7),
- and during the conveying of the products, the rollers (3, 4) are caused to revolve continuously at the predetermined speed of rotation, and for each product:
. mi photographs of this product are made at the first station (5), where i ≥ 3, nj photographs at the second station (6), where j ≥ 1, and pk photographs at the third station (7), where k ≥ 3,
. the theoretical diameter of the product is calculated from the photographs made,
. and the photographs mi, nj and pk to be taken into account with a view to analysing the said product are determined by comparison of the theoretical diameter of the said product with the predetermined average diameter, in such a way as to obtain a complete analysis, without overlapping or with a given overlap, of the total surface of the said product.

2. Analysing method according to claim 1, **characterised in that** a speed of rotation of the rollers (3, 4) is determined which is adapted so that a product of average diameter undergoes a rotation on itself with an angle of rotation substantially in the range between 110° and 130° between the first and second stations (5, 6), and with an angle of rotation substantially in the range between 105° and 115° between the second and third stations (6, 7).

3. Analysing method according to claim 2, **characterised in that** the stations (5-7) of analysing means are arranged in such a way that the distance between the first and second stations (5, 6) is substantially in the range between 1.1 and 1.2 times the distance between the second and third stations (6, 7), and **in that** the rollers (3, 4) are caused to revolve in rotation at a constant speed of rotation along the whole of the said analysing device.

4. Analysing method according to one of claims 2 or 3, **characterised in that** a speed of rotation of the rollers (3, 4) is determined which is adapted so that a product of average diameter undergoes a rotation on itself with an angle of rotation substantially equal to 125.5° between the first and second stations (5, 6), and with an angle of rotation substantially equal to 109° between the second and third stations (6, 7).

5. Analysing method according to one of claims 2 to 4, **characterised in that** the distance between the first and second stations (5, 6) is substantially equal to 1.15 times the distance between the second and third stations (6, 7).

6. Analysing method according to one of claims 2 to 5, **characterised in that** the cameras (8, 9) of the station (5) comprising two cameras are arranged in such a way that their respective optical axes define a V with a vertex angle substantially equal to 109°.

7. Analysing method according to one of the preceding claims, **characterised in that** the first station (5) is equipped with two cameras (8, 9), and the second and third stations (6, 7) with one camera (12, 14).

8. Analysing method according to one of the preceding claims, **characterised in that** three photographs of each product are taken at the first and third stations (5, 7), and a single photograph of the said products at the second station (6).

9. Analysing device with a view to the automatic sorting of products such as pieces of fruit, the said device comprising:
. a conveyer line for transporting the products along a longitudinal axis (x), the said line having a plurality of rollers (3, 4) which are mounted so as to each rotate freely about a transverse axis of rotation orthogonal to the axis (x) and are spaced apart in such a way that two adjoining rollers (3, 4) define, between them, a seating for a product,
. means for analysing the surface of the products, which means are arranged above the conveyer line and have a number of successive stations (5-7) arranged at a distance from one another along the axis (x),
. means (20) for driving the rollers (3, 4) in rotation about their axes of rotation, which means are suitable for bringing about rotation of the said rollers between the analysing stations (5-7) in such a way that different faces of the products are analysed at each station,
. and a processing unit adapted to receive information emanating from the analysing means, and to calculate workable sorting data from predefined, programmed criteria,
the said analysing device being **characterised in that**:
. the analysing means comprise three analysing stations, each of the said analysing stations (5-7) having at least one camera (8, 9, 12, 14) which is orientated and adapted to make, with an adjustable frequency, photographs of the products transported by the conveyer line,
. one of the said stations (5) having two cameras (8, 9) which are arranged on either side of the conveyer line in the same vertical plane orthogonal to the axis (x), and are orientated in such a way that their respective optical axes form a V which is centred on the said axis (x) and has a vertex angle substantially in the range between 90° and 130°,
. the other two stations (6, 7) each comprising a camera (12, 14) which is arranged plumb with the conveyer line and is orientated in such a way that its optical axis is vertical and secant with the axis (x),
. the means (20) for driving the rollers (3, 4) in rotation are arranged in such a way as to bring about continuous rotation of the said rollers along the analysing means, at a speed of rotation which is adapted so that a product of predetermined average diameter which is located in the plane of a camera (8, 9) at the first station (5) and is caused to revolve on itself along the whole of the analysing means under the effect of the rotation of the said rollers, undergoes a rotation such that four complementary zones of its surface are viewed by the respective cameras (8, 9, 12, 14) of the first, second and third stations (5-7),
. the processing unit is adapted to:
. process, for each product, mi photographs of the said products taken at the first station (5), where i ≥ 3, nj photographs taken at the second station (6), where j ≥ 1, and pk photographs taken at the third station (7), where k ≥ 3,
. and to determine, by a comparison of the theoretical diameter of this product with the predetermined average diameter, the mi, nj and pk photographs to be taken into account with a view to analysing the said product, in such a way as to obtain a complete analysis, without overlapping or with a given overlap, of the total surface of the said product.

10. Analysing device according to claim 9, **characterised in that** the first station (5) has two cameras (8, 9), the second and third stations (6, 7) having a single camera (12, 14).

11. Analysing device according to one of claims 9 or 10, **characterised in that** the distance between the first and second stations (5, 6) is substantially in the range between 1.1 and 1.2 times the distance between the second and third stations (6, 7).

12. Analysing device according to claim 11, **characterised in that** the distance between the first and second stations (5, 6) is substantially equal to 1.15 times the distance between the second and third stations (6, 7).

13. Analysing device according to one of claims 9 to 12, **characterised in that** the cameras (8, 9) of the station (5) comprising two cameras are advantageously orientated in such a way that their respective optical axes define a V with a vertex angle substantially equal to 109°.

14. Analysing device according to one of claims 9 to 13, **characterised in that** the means for driving the rollers (3, 4) in rotation comprise an endless belt (20) extending, underneath the conveyer line, along the analysing means, and arranged in such a way as to be tangential to the lower generatrix of the said rollers, and means for driving the said endless belt which are suitable for causing the latter to run at a regulable running speed which is different from that of the conveyer line.

15. Analysing device according to claim 14, **characterised in that** the means for driving the endless belt (20) are adapted to drive it in the same direction of displacement as that of the conveyer line at an adjustable running speed which is lower than that of the said conveyer line.
